(19) **Europäisches Patentamt / European Patent Office / Office européen des brevets**

(11) **EP 4 019 745 B1**

(12) **FASCICULE DE BREVET EUROPEEN**

(45) Date de publication et mention de la délivrance du brevet:
**05.02.2025 Bulletin 2025/06**

(21) Numéro de dépôt: **21216729.0**

(22) Date de dépôt: **22.12.2021**

(51) Classification Internationale des Brevets (IPC):
**F01K 1/08** *(2006.01)*     **F28D 20/02** *(2006.01)*

(52) Classification Coopérative des Brevets (CPC):
**F01K 1/08; F28D 20/025;** Y02E 60/14

(54) **PROCÉDÉ DE STOCKAGE D'ÉNERGIE DANS UN ACCUMULATEUR DE VAPEUR**

VERFAHREN ZUM SPEICHERN VON ENERGIE IN EINEM DAMPFAKKUMULATOR

METHOD FOR STORING ENERGY IN A STEAM ACCUMULATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2020 FR 2013972**

(43) Date de publication de la demande:
**29.06.2022 Bulletin 2022/26**

(73) Titulaire: **Commissariat à l'Energie Atomique et aux Energies Alternatives
75015 Paris (FR)**

(72) Inventeurs:
• **GHANATOS, Elie**
  **38054 GRENOBLE Cedex 09 (FR)**
• **POUVREAU, Jérôme**
  **38054 GRENOBLE Cedex 09 (FR)**
• **ROUGE, Sylvie**
  **38054 GRENOBLE Cedex 09 (GM)**

(74) Mandataire: **Hautier IP
20, rue de la Liberté
06000 Nice (FR)**

(56) Documents cités:
EP-A1- 2 444 594     EP-A1- 3 081 770
EP-A1- 3 489 609     JP-A- S60 159 377

**Description**

**DOMAINE TECHNIQUE**

La présente invention concerne le domaine des accumulateurs de vapeur. Elle trouve pour application particulièrement avantageuse le stockage d'énergie dans un accumulateur de vapeur par condensation directe en particulier lorsque le gaz stocké comprend des gaz incondensables tels que par exemple dans le cas de la géothermie ou encore les centrales thermodynamiques de production d'électricité.

**ETAT DE LA TECHNIQUE**

La vapeur d'eau est l'un des fluides caloporteurs utilisés fréquemment dans l'industrie. Elle a pour avantage de pouvoir transporter une grande quantité de chaleur par unité de masse : car elle la transporte en grande partie sous forme de chaleur latente, par sa transition de phase liquide - vapeur. Ce fluide caloporteur permet par exemple de produire de l'électricité dans les centrales thermodynamiques.

Le stockage de la vapeur dans l'industrie a pour but de stocker l'énergie de la vapeur aux périodes où celle-ci n'est pas nécessaire et de la restituer aux moments où un procédé en a besoin. Le stockage thermique permet ainsi de déphaser la production de vapeur et son utilisation. Le stockage thermique peut également permettre de stabiliser la fourniture de vapeur à un procédé en lissant les fluctuations liées à la production. Document EP2 444 594 A1 décrit un système et un procédé pour l'accumulation de vapeur dans des cuves pour une utilisation solaire.

Dans les secteurs de production d'énergie électrique renouvelable, le stockage de vapeur permet de stocker l'énergie thermique pendant les périodes où la demande en électricité est faible afin de la restituer pendant les pics de consommation électrique dans le but de limiter le recours à des moyens d'appoint fossiles.

Il existe plusieurs façons de stocker de la vapeur notamment par condensation directe, par exemple en la stockant dans des réservoirs d'eau liquide sous pression dénommés accumulateurs de vapeur.

Dans plusieurs applications industrielles telles que les centrales thermodynamiques de production d'électricité à partir d'énergie en provenance de la géothermie, la vapeur peut contenir des gaz incondensables tels que du dioxyde de carbone ($CO_2$). L'utilisation d'un accumulateur de vapeur dans ce type d'application est donc classiquement évitée.

En effet, la cuve de l'accumulateur étant fermée, sa capacité de stockage diminue fortement, car les gaz incondensables transportés par la vapeur d'eau injectée s'accumulent dans le ciel du réservoir pendant la phase de charge. La pression partielle de gaz incondensables augmente rapidement au cours de la phase de charge au détriment de la pression partielle de vapeur. Cette dernière est alors inférieure à la pression totale de fin de charge qui est une donnée du système. La présence de gaz incondensable se traduit donc par une diminution de la capacité de stockage du réservoir.

La présente invention a pour but de proposer une solution qui permet de limiter l'impact des gaz incondensables sur la capacité de stockage d'un accumulateur de vapeur.

Les autres objets, caractéristiques et avantages de la présente invention apparaîtront à l'examen de la description suivante et des dessins d'accompagnement. Il est entendu que d'autres avantages peuvent être incorporés.

**RESUME**

Pour atteindre cet objectif, l'invention prévoit un procédé de stockage d'énergie thermique dans un accumulateur de vapeur comprenant une cuve selon la revendication 1, avantageusement fermée, préférentiellement étanche sous pression, contenant un liquide et un ciel de gaz agencé au-dessus du liquide, un dispositif d'injection de gaz entrant dans la cuve et un dispositif d'évacuation de gaz sortant de la cuve, le gaz comprenant de la vapeur et au moins un gaz incondensable.

Le procédé selon l'invention permet ainsi de limiter la pression partielle de gaz incondensable dans la cuve et plus spécifiquement dans le ciel de gaz situé au-dessus du liquide contenu dans la cuve. Or, la pression partielle de gaz dans la cuve est classiquement le paramètre limitant la capacité énergétique de l'accumulateur, car la pression partielle de gaz limite la pression partielle de vapeur pour une pression totale de gaz fixée. La capacité de stockage d'un accumulateur de vapeur est donc optimisée par le présent procédé. La présente invention permet d'appliquer le procédé de stockage à des systèmes de stockage thermique de type accumulateur de vapeur existante. L'invention permet d'augmenter la capacité de stockage sans augmenter la taille de l'accumulateur ni la pression maximale de fonctionnement du stockage.

En diminuant la fraction de gaz incondensables dans le ciel de gaz de la cuve, la capacité de stockage augmente. La même quantité d'énergie pourra donc être stockée dans un accumulateur de plus petit volume, ce qui permet de réduire le coût de l'installation ou bien pour un même volume d'accumulateur, une plus grande quantité d'énergie sera stockée, ce qui permet d'avoir une installation plus rentable.

Un autre aspect concerne un accumulateur de vapeur comprenant une cuve selon la revendication 14, avantageusement fermée, préférentiellement étanche sous pression, contenant un liquide et un ciel de gaz, un dispositif d'injection de gaz entrant dans la cuve, un dispositif d'évacuation de gaz sortant de la cuve, un module de gestion comprenant un ordinateur et une unité de contrôle comprenant des vannes de contrôles du dispositif d'injection de gaz et du dispositif d'évacuation de gaz sortant de la cuve.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

Les figures 1A à 1C représentent un schéma d'un accumulateur de vapeur selon l'invention. La figure 1A représente l'accumulateur selon une première possibilité. La figure 1B représente l'accumulateur selon une deuxième possibilité. La figure 1C représente l'accumulateur selon une troisième possibilité.

La figure 2 représente l'évolution de la pression dans un accumulateur de vapeur sans gaz incondensable selon l'exemple 1.

La figure 3 représente l'évolution de l'énergie dans un accumulateur de vapeur sans gaz incondensable selon l'exemple 1.

La figure 4 représente l'évolution de la pression (partielle de vapeur, partielle de gaz et totale) dans un accumulateur de vapeur avec une fraction massique de 2,8% de gaz incondensables selon l'exemple 2.

La figure 5 représente l'évolution de l'énergie dans un accumulateur de vapeur avec une fraction massique de 2,8% de gaz incondensables selon l'exemple 2.

La figure 6 représente l'évolution de la pression (partielle de vapeur, partielle de gaz et totale) dans un accumulateur de vapeur avec une fraction massique de 2,8% de gaz incondensables selon l'exemple 3 avec un débit de gaz injecté plus faible qu'à l'exemple 2.

La figure 7 représente l'évolution de l'énergie dans un accumulateur de vapeur avec une fraction massique de 2,8% de gaz incondensables selon l'exemple 3 avec un débit de gaz injecté plus faible qu'à l'exemple 2.

La figure 8 représente l'évolution de la capacité de stockage d'un accumulateur de vapeur en fonction de la fraction massique du $CO_2$ dans le gaz.

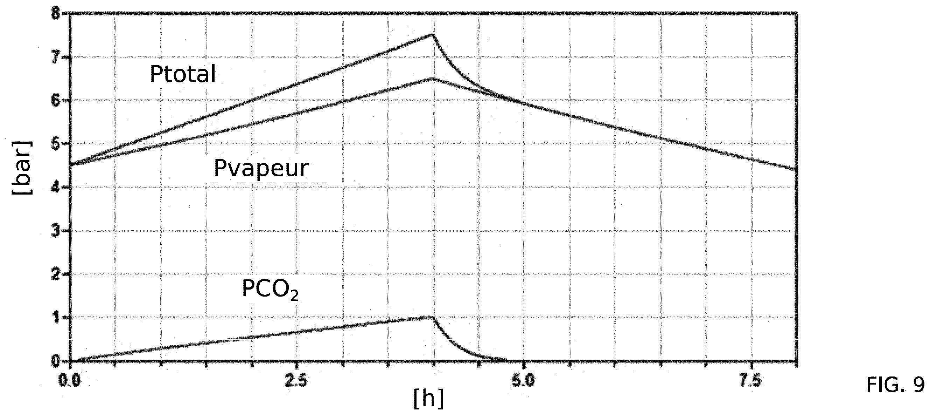

La figure 9 représente l'évolution de la pression dans un accumulateur de vapeur avec une fraction massique de 2,8% de gaz incondensables dans la vapeur selon un exemple de l'invention illustré en exemple 4.

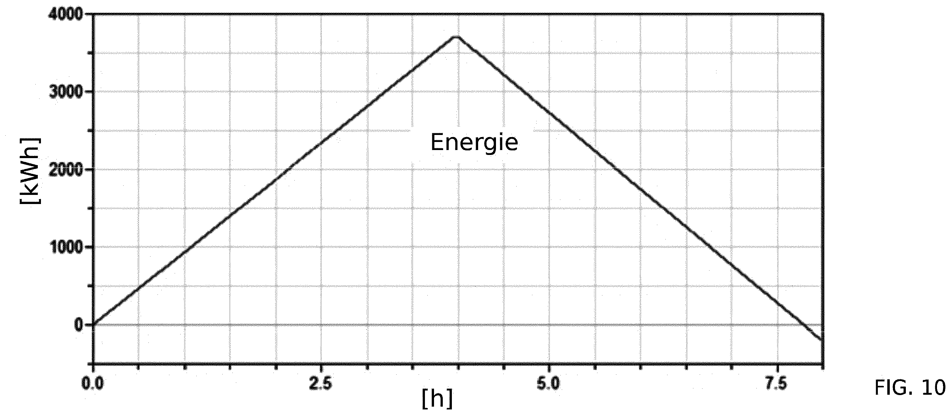

La figure 10 représente l'évolution de l'énergie dans un accumulateur de vapeur avec une fraction massique de 2,8% de gaz incondensables dans la vapeur selon un exemple de l'invention illustré en exemple 4.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, l'évacuation de gaz à un deuxième débit de gaz est intermittente au cours de la phase de charge.

Selon un exemple, l'évacuation de gaz à un deuxième débit de gaz est continue au cours de la phase de charge. Cette disposition assure une grande facilité de gestion de la phase de charge.

Selon un exemple, le deuxième débit de gaz est inférieur au premier débit de gaz. De cette manière, la charge est réalisée tout en limitant la pression partielle de gaz incondensable dans la cuve.

Selon un exemple, l'évacuation de gaz à un deuxième débit de gaz est réalisée depuis le ciel de gaz.

Selon un exemple, l'injection de gaz à un premier débit de gaz est continue au cours de la phase de charge.

Selon un exemple, l'injection de gaz à un premier débit de gaz comprend un débit principal de gaz et un débit complémentaire de gaz. Préférentiellement, le premier débit de gaz est constitué d'un débit principal de gaz et d'un débit complémentaire de gaz.

Selon un exemple, l'injection de gaz à un débit complémentaire de gaz est intermittente au cours de la phase de charge. Selon cette disposition, le premier débit de gaz est continu au cours de la phase de charge, mais le premier débit de gaz est variable, il augmente et diminue en fonction de l'intermittence du débit complémentaire.

Selon un exemple, l'injection de gaz à un débit complémentaire de gaz est continue au cours de la phase de charge.

Selon un exemple, l'injection de gaz à un débit complémentaire de gaz est réalisée dans le liquide contenu dans la cuve. Cette disposition permet d'optimiser l'équilibre thermodynamique entre le liquide et le ciel de gaz.

Selon un exemple, l'injection de gaz à un débit complémentaire de gaz est réalisée dans un ciel de gaz agencé au-dessus du liquide contenu dans la cuve. Dans cette disposition, le ciel de gaz est balayé par le débit complémentaire. Le pilotage de la phase de charge est facilité suivant ce mode de réalisation.

Selon un exemple, le débit complémentaire de gaz est inférieur au débit principal de gaz. Le débit de gaz complémentaire correspond à compenser au moins partiellement le deuxième débit d'évacuation de gaz de sorte à notamment respecter une consigne de temps de charge identique, quel que soit la fraction de gaz incondensable accompagnant la vapeur dans le gaz.

Selon un exemple, le deuxième débit de gaz est supérieur ou égal au débit complémentaire de gaz.

Selon un exemple, le liquide contenu dans la cuve est de l'eau et la vapeur du gaz est de la vapeur d'eau comprenant au moins un gaz incondensable.

Il est précisé que dans le cadre de la présente invention, le terme débit s'entend comme un débit massique en kg/s.

La quantité de gaz incondensable dans le gaz comprenant la vapeur est donnée en fraction ou pourcentage massique par rapport à la quantité massique totale de gaz.

Un accumulateur de vapeur comprend une cuve 1 contenant un liquide 2 et un ciel de gaz 3. La cuve est avantageusement fermée, plus préférentiellement étanche de sorte à maintenir les fluides : le liquide 2 et le ciel de gaz 3, à l'intérieur de la cuve 1. La cuve 1 est avantageusement configurée pour permettre une mise sous pression du liquide 2 et du ciel de gaz 3. La cuve 1 est avantageusement étanche aux gaz et aux liquides.

La cuve 1 comprend un dispositif d'injection de gaz 5 et un dispositif d'évacuation de gaz.

Le dispositif d'injection de gaz 5 est destiné à injecter dans la cuve 1 un gaz. Préférentiellement, le gaz est de la vapeur par exemple de la vapeur d'eau comprenant au moins un gaz incondensable. L'injection de gaz est au moins partiellement réalisée dans le liquide 2. Selon une possibilité, le dispositif d'injection comprend un injecteur 10 par exemple sous la forme d'une ligne d'injection plongeant dans le liquide 2 de la cuve 1, préférentiellement en partie basse. La ligne d'injection comprend par exemple une pluralité de sortie préférentiellement répartie dans la cuve 1. L'injection de gaz par le dispositif d'injection de gaz 5 se fait à un premier débit de gaz.

Le dispositif d'évacuation de gaz est destiné à évacuer hors de la cuve 1 le gaz. L'évacuation de gaz est réalisée depuis le ciel de gaz 3. Préférentiellement, le gaz est de la vapeur par exemple de la vapeur d'eau comprenant au moins un gaz indésirable. Selon une possibilité, le dispositif d'évacuation comprend une conduite d'évacuation 4 débouchant à une extrémité dans la cuve 1 et se prolongeant à l'extérieur de la cuve 1. L'évacuation de gaz par le dispositif d'évacuation de gaz se fait à un deuxième débit de gaz.

Selon un mode de réalisation, la cuve 1 comprend un dispositif de remplissage et vidange 6 du liquide 2. Le dispositif de remplissage et de vidange 6 de liquide 2 est utilisé pour remplir ou vider la cuve 1 de liquide 2. Préférentiellement, ce dispositif de remplissage et de vidange 6 est agencé en partie basse de la cuve 1 pour faciliter sa vidange. Selon une possibilité, le dispositif de remplissage et de vidange 6 comprend une vanne 9 assurant l'ouverture et la fermeture du dispositif de remplissage et de vidange 6 permettant de contrôler le remplissage et la vidange de la cuve 1.

L'accumulateur de vapeur comprend selon un mode de réalisation, une unité de commande comprenant des vannes commandées pour contrôler l'injection et l'évacuation de gaz dans et hors de la cuve 1. L'unité de commande comprend avantageusement une vanne d'évacuation 7 agencée sur le dispositif d'évacuation préférentiellement sur la conduite d'évacuation 4. La vanne d'évacuation 7 permet d'initier ou d'arrê-ter l'évacuation de gaz hors de la cuve 1. Préférentiellement, la vanne d'évacuation 7 est configurée pour contrôler le deuxième débit c'est-à-dire le débit d'évacuation de gaz.

L'unité de commande comprend avantageusement une vanne d'injection 8 agencée sur le dispositif d'injection 5 préférentiellement sur la ligne d'injection. La vanne d'injection 8 permet d'initier ou d'arrêter l'injection de gaz dans la cuve 1. Préférentiellement, la vanne d'injection 8 est configurée pour contrôler le premier débit c'est-à-dire le débit d'injection de gaz.

L'accumulateur comprend selon une possibilité au moins un dispositif de mesure notamment de paramètres de fonctionnement de l'accumulateur. Au moins un dispositif de mesure est un capteur de pression de la pression total dans la cuve 1.

L'accumulateur de vapeur comprend selon un mode de réalisation un module de gestion. Le module de gestion est destiné à optimiser la capacité de stockage de l'accumulateur en fonction de la fraction massique de gaz incondensable dans la vapeur du gaz stocké.

Le module de gestion comprend préférentiellement des moyens informatiques traditionnels, notamment un processeur, une mémoire, et un programme d'ordinateur stocké dans la mémoire et comprenant une série d'instructions configurée pour traiter des données d'entrée, notamment reçues de dispositifs de mesure ou des données de l'accumulateur.

L'invention concerne avantageusement le stockage thermique sous forme de vapeur par condensation directe. La vapeur est accumulée dans la cuve 1 contenant un liquide 2 sous pression.

Selon un mode de réalisation préféré, le liquide 2 contenu dans la cuve 1 est de l'eau à l'état liquide tandis que le gaz comprend de la vapeur telle que de la vapeur d'eau et au moins un gaz incondensable.

Un accumulateur de vapeur selon l'invention fonctionne pour mettre en oeuvre un procédé de stockage d'énergie thermique. Le procédé de stockage d'énergie thermique comprend une phase de charge au cours de laquelle l'énergie thermique est stockée dans l'accumulateur. Le procédé comprend avantageusement une phase de décharge au cours de laquelle l'énergie thermique est déstockée de l'accumulateur.

Dans la présente description, on entend par gaz un mélange de gaz comprenant de la vapeur telle que de la vapeur d'eau et au moins un gaz incondensable.

On entend par gaz incondensable, un gaz qui ne peut être condensé dans les conditions d'utilisation de l'accumulateur de vapeur. Les gaz incondensables sont par exemple du dioxyde de carbone $CO_2$ ou encore $H_2S$, $N_2$, $CH_4$, $Ar$, $O_2$, $H_2$, $He$, $C_2H_6$, $C_3H_8$. Dans plusieurs applications industrielles telles que les centrales thermodynamiques de production d'électricité sur des sites géothermiques, la vapeur peut contenir des gaz incondensables.

Le principe d'une phase de charge et d'une phase de décharge d'un accumulateur de vapeur est décrit ci-après.

La phase de charge permet de stocker l'énergie thermique sous forme de vapeur.

Au début de la phase de charge, la cuve 1 contient une quantité de liquide 2 à saturation et un ciel de gaz 3 saturé à la pression minimale de fonctionnement. La vanne de décharge 7 est fermée.

Un gaz à une pression plus élevée que la pression dans la cuve 1 est injecté, préférentiellement par le bas de la cuve 1, à travers le dispositif d'injection 5. Préférentiellement, la vanne de charge 8 est ouverte. Les bulles de vapeur se condensent au contact du liquide 2 plus froid et libèrent de l'énergie, ce qui augmente la température du liquide 2. Si le liquide 2 et le ciel de gaz 3 sont à l'équilibre thermodynamique, cette augmentation de la température se traduit par une augmentation de la pression dans la cuve 1 par évaporation du liquide 2 à sa surface libre. Si l'épaisseur de liquide 2 est insuffisante pour assurer la condensation de toute la vapeur au contact du liquide 2, l'augmentation de pression dans la cuve 1 est liée à l'accumulation de vapeur dans le ciel de gaz 3. Cette vapeur en surpression par rapport à la pression de saturation, se condense à la surface libre du liquide 2 pour tendre vers l'équilibre thermodynamique. La surface libre du liquide s'entend comme la surface du liquide 2 à l'interface avec le ciel de gaz 3.

Le niveau de liquide 2 augmente aussi, résultat de la condensation de la vapeur injectée.

Pendant cette phase de charge, la pression dans la cuve 1 augmente, selon une possibilité en continu. Selon un mode de réalisation, le stockage s'arrête quand la pression atteint une pression maximale cible. Selon une possibilité, la pression cible est la pression du dispositif d'injection 5, plus précisément la pression maximale du gaz injecté. Le niveau de liquide et la pression sont maximaux à la fin de la phase de charge.

La phase de décharge est décrite ci-après. La phase de décharge est destinée à permettre de fournir de l'énergie thermique sous forme de vapeur à une source finale. Par exemple, la source finale peut être une turbine à vapeur.

Pendant la phase de décharge, le dispositif d'injection 5 est fermé, préférentiellement la vanne de charge 8 est fermée. La vanne de décharge 7 est ouverte.

Lors de l'ouverture du dispositif d'évacuation, la pression dans la cuve 1 diminue provoquant une vaporisation du liquide 2. En effet, le liquide 2 se retrouve à une température très légèrement supérieure à la température de saturation, entrainant une vaporisation rapide du liquide 2. Cette vaporisation nécessite de l'énergie, chaleur latente de vaporisation, qui est fournie par le liquide 2. La température du liquide 2 diminue en conséquence. Le niveau de liquide 2 diminue pendant cette phase de décharge, car une partie de liquide 2 est évaporée. L'accumulateur produit de la vapeur saturée.

Cette phase de décharge s'arrête quand la cuve 1 atteint une pression minimale cible. Préférentiellement, la pression minimale cible est fonction de la pression minimale acceptée par la source finale.

Il peut arriver qu'il y ait un déséquilibre thermodynamique avec une pression plus élevée que la pression d'équilibre à la charge et une pression moins élevée à la décharge. L'hypothèse d'équilibre thermodynamique est donc favorable. Le déséquilibre est défavorable en interrompant plus tôt la charge et la décharge.

Selon l'invention, le gaz injecté dans l'accumulateur comprend au moins un gaz incondensable. La présence de ces derniers dans la vapeur a un impact important sur la capacité de stockage d'un accumulateur de vapeur.

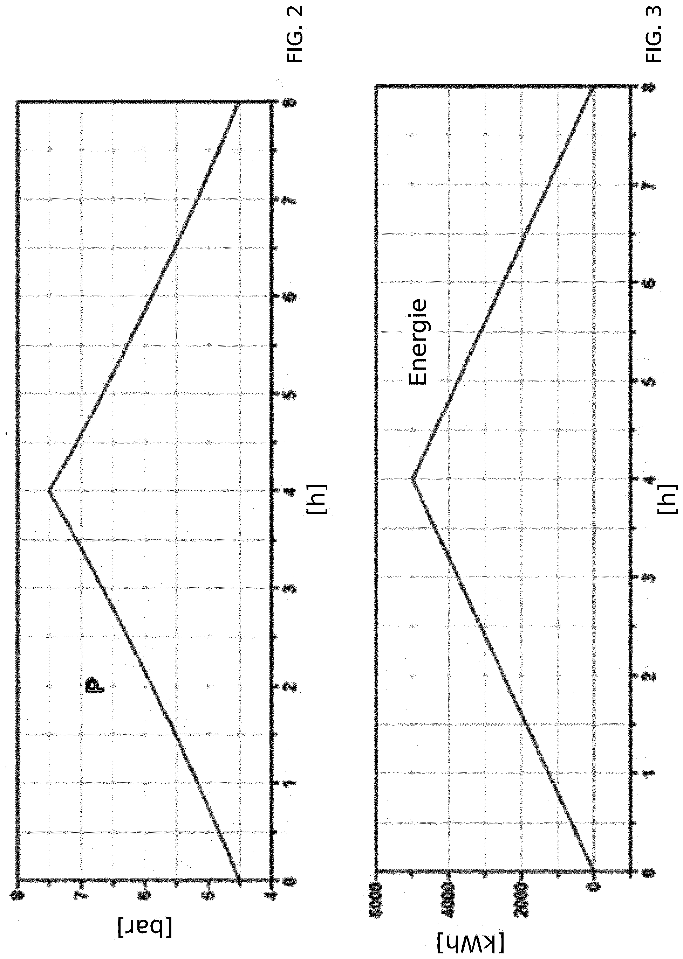

La cuve est fermée, sa capacité de stockage diminue fortement, car les gaz incondensables transportés par la vapeur injectée s'accumulent dans le ciel du gaz 3 pendant la phase de charge. La pression partielle de gaz incondensables augmente au cours de la phase de charge au détriment de la pression partielle de vapeur. Cette dernière est alors inférieure à la pression maximale cible également dénommée pression totale de fin de charge qui est une valeur prédéfinie. Or, la température du liquide suit la pression de la vapeur. La température finale du liquide 2 dans la cuve 1 sera donc inférieure à celle qu'elle aurait eue en absence de gaz incondensable. L'énergie stockée étant proportionnelle en premier ordre à l'élévation de température, moins d'énergie sera stockée dans la cuve 1 en présence de gaz incondensables. Cette diminution de l'énergie du fait d'une moindre pression partielle de la vapeur est illustrée aux figures 2 et 3 correspondant à l'exemple 1.

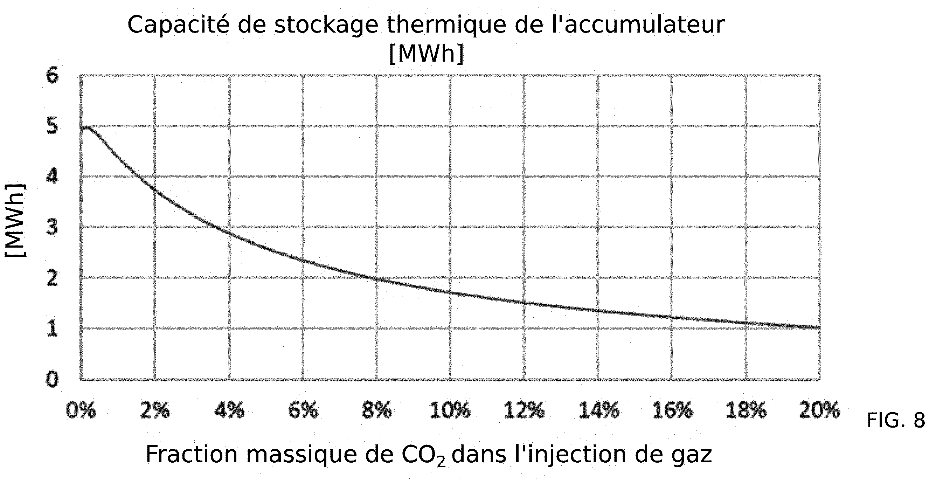

La diminution de l'énergie stockée est d'autant plus marquée que la fraction de gaz incondensable est élevée, comme illustré à la figure 8. À titre d'exemple, selon les exemples 1 à 3, une diminution de 33% de l'énergie stockée avec une fraction massique de gaz incondensable de 2,8%, et une diminution de 64% de l'énergie stockée avec une fraction massique de gaz incondensable de 10% (figure 8). Ces valeurs sont obtenues en supposant l'équilibre thermodynamique entre le liquide et le gaz dans la cuve 1. En cas de déséquilibre thermodynamique, l'effet de la présence des gaz incondensable sera accentué.

La présente invention propose que lors de la phase de charge, la présence de gaz incondensable soit compensée par une gestion de la pression du ciel de gaz 3 pour réduire la pression partielle de gaz incondensable au profit de la pression partielle de vapeur.

À cet effet, la phase de charge comprend en plus de l'injection d'un gaz à un premier débit dans la cuve 1 de l'accumulateur une évacuation de gaz à un deuxième débit depuis le ciel de gaz 3.

La phase de charge comprend donc une injection de gaz à un premier débit de gaz. Le gaz injecté comprend une fraction de gaz incondensable. Préférentiellement, le gaz injecté est un mélange de vapeur, préférentiellement de vapeur d'eau, et d'au moins un gaz incondensable. Le gaz est injecté par un dispositif d'injection de gaz 5. Le gaz est injecté préférentiellement de manière continue pendant toute la phase de charge à un premier débit de gaz qui peut être stable ou variable.

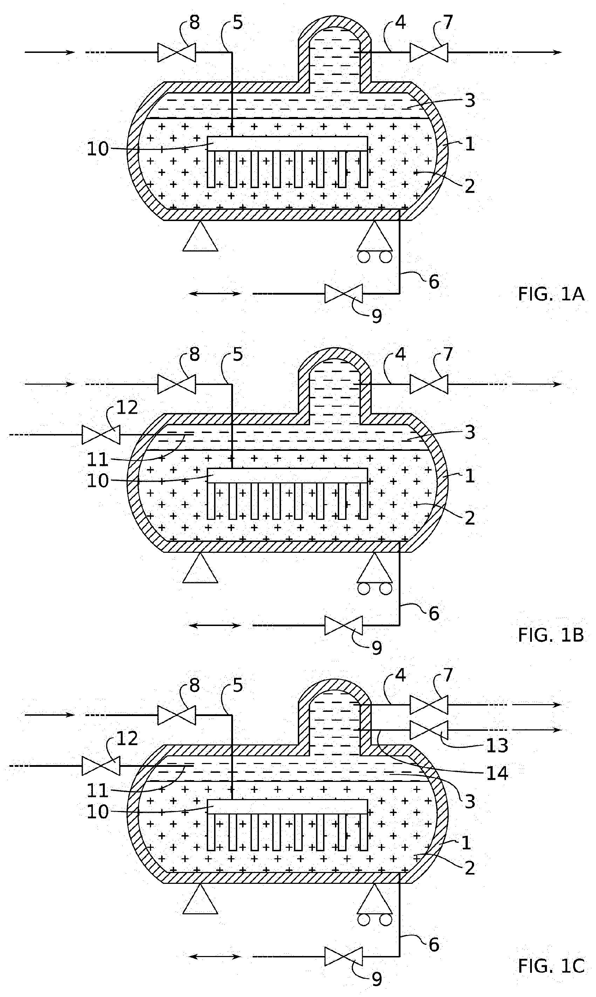

Au cours de la phase de charge, le procédé comprend également une évacuation, pouvant être aussi dénommée extraction de gaz avantageusement depuis le ciel de gaz 3. Selon une première possibilité, l'évacuation de gaz au cours de la phase de charge est réalisée par la conduite d'évacuation de gaz 4 également utilisé pour l'évacuation de gaz lors de la phase de décharge, tel qu'illustré aux figures 1A et 1B. Selon une deuxième possibilité, l'évacuation de gaz lors de la phase de charge se fait par une évacuation 14, préférentiellement munie d'une vanne de décharge 13. L'évacuation de gaz lors de la phase de décharge est réalisée par la conduite d'évacuation différente 4 telle qu'illustrée à la figure 1C. Le dispositif d'évacuation comprend une évacuation de gaz 14 distincte de la conduite d'évacuation 4 utilisée pour la phase de décharge. Cette deuxième possibilité permet notamment d'adapter l'évacuation au débit évacué. En phase de charge, le débit évacué est inférieur à celui évacué en phase de décharge si bien que les diamètres de la canalisation d'évacuation 4 et de l'évacuation 14 sont ainsi adaptés. Le gaz évacué correspond au gaz du ciel de gaz 3. Selon l'invention, le gaz évacué comprend une fraction de gaz incondensable. Préférentiellement, le gaz évacué est un mélange de vapeur, préférentiellement de vapeur d'eau, et d'au moins un gaz incondensable.

Le gaz est évacué de manière continue ou intermittente à un deuxième débit de gaz qui peut être stable ou variable au cours de la phase de charge.

Le deuxième débit de gaz est avantageusement inférieur au premier débit de gaz de sorte à permettre la charge de l'accumulateur c'est-à-dire l'augmentation de la pression dans la cuve 1 et donc de l'énergie stockée. À titre d'exemple, le deuxième débit de gaz représente de 2% à 50% du premier débit de gaz.

Le gaz est évacué depuis le ciel de gaz 3. Le deuxième débit de gaz est avantageusement contrôlé par l'unité de commande et notamment une vanne d'évacuation 7.

Selon une possibilité, le gaz est évacué pendant toute la phase de charge à un débit stable ou variable, l'évacuation de gaz est continue. Selon une autre possibilité, le gaz est évacué de manière intermittente au cours de la phase de charge, c'est à dire qu'au moins un dégazage, préférentiellement des dégazages successifs ont lieu. Le deuxième débit de gaz est alors soit identique lors de tous les dégazages, soit différent.

Selon un mode de réalisation, l'injection de gaz à un premier débit comprend un débit principal et un débit complémentaire de gaz.

Le premier débit de gaz est la somme du débit principal et du débit complémentaire de gaz.

L'injection de gaz au débit principal est avantageusement continue pendant la phase de charge et réalisée dans le liquide 2.

L'injection de gaz au débit complémentaire peut être continue pendant la phase de charge ou bien être intermittente. L'injection de gaz au débit complémentaire est destinée à compenser au moins en partie l'évacuation de gaz. Le débit complémentaire augmente le débit de gaz injecté par rapport à un accumulateur de l'état de la technique assurant une phase de charge sans évacuation de gaz. Le débit complémentaire peut être stable ou bien variable au cours de la charge.

Avantageusement, l'injection de gaz au débit complémentaire est réalisée par le dispositif d'injection 5.

Selon une première possibilité illustrée à la figure 1A l'injection de gaz au débit complémentaire est réalisée dans le liquide 2. Selon cette possibilité, l'injection de gaz au débit de gaz complémentaire est préférentiellement réalisée par le même dispositif d'injection 5 que l'injection de gaz au débit principal c'est à dire par exemple la ligne d'injection illustré en figure 1A. Il peut être nécessaire de surdimensionner le dispositif d'injection 5. Dans ce cas-là, la vanne 8 assure le contrôle de l'injection et avantageusement également du premier débit de gaz injecté. Selon une alternative, le dispositif d'injection 5 comprend un injecteur 10 pour l'injection de gaz au débit principal et un injecteur complémentaire 11 pour l'injection de gaz au débit complémentaire. Selon cette alternative de cette première possibilité, l'injecteur complémentaire 11 est agencé dans la cuve 1 plongeant dans le liquide 2 préférentiellement en partie basse. Dans ce cas-là, l'injection complémentaire 11 comprend une vanne complémentaire 12 contrôlant l'injection de gaz complémentaire et avantageusement le débit de gaz complémentaire.

Selon une deuxième possibilité illustrée à la figure 1B, l'injection de gaz au débit complémentaire est réalisée dans le ciel de gaz 3. Selon cette possibilité, l'injection de gaz au débit de gaz complémentaire est préférentiellement réalisée par le dispositif d'injection 5 comprenant un injecteur 10 pour l'injection de gaz au débit principal et un injecteur complémentaire 11 pour l'injection de gaz au débit complémentaire. Selon cette deuxième possibilité, l'injecteur complémentaire 11 est agencé dans la cuve dans le ciel de gaz 3. Dans ce cas-là, l'injection complémentaire 11 comprend une vanne complémentaire 12 contrôle l'injection de gaz complémentaire et avantageusement le débit de gaz complémentaire.

Selon un premier mode de réalisation, l'injection de gaz est continue à un premier débit principal qui peut être stable ou variable au cours de la phase de charge. L'injection de gaz est continue au premier débit complémentaire qui peut être stable ou variable au cours de la phase de charge. L'évacuation de gaz est continue au deuxième débit qui peut être stable ou variable.

Selon un deuxième mode de réalisation, l'injection de gaz est continue au premier débit de gaz principal qui peut être stable ou variable au cours de la phase de charge. L'injection de gaz est intermittente au premier débit complémentaire qui peut être stable ou variable au cours de la phase de charge. L'évacuation de gaz est continue au deuxième débit qui peut être stable ou variable au cours de la phase de charge.

Selon un troisième mode de réalisation, l'injection de gaz est continue au premier débit de gaz principal qui peut être stable ou variable au cours de la phase de charge. L'injection de gaz est intermittente au premier débit complémentaire qui peut être stable ou variable au cours de la phase de charge. L'évacuation de gaz est continue au deuxième débit qui peut être stable ou variable au cours de la phase de charge. Dans ce troisième mode de réalisation, l'injection de gaz au débit complémentaire et l'évacuation de gaz au deuxième débit peuvent être réalisées en alternance ou en simultané, sans être dépendantes l'une de l'autre.

Le procédé selon l'invention est destiné à piloter le premier débit de gaz et le deuxième débit de gaz en fonction de la fraction massique de gaz incondensable pour atteindre un stockage d'énergie optimal.

A cet effet, le module de gestion contrôle du premier débit de gaz et le deuxième débit de gaz en fonction de la fraction de gaz incondensable, préférentiellement également de la pression cible maximale et la pression cible minimale de l'accumulateur, préférentiellement également la pression mesurée par le dispositif de mesure de la pression, préférentiellement également la durée de charge souhaitée.

Selon un mode de réalisation avantageux, le gaz extrait par le dispositif d'évacuation au cours de la phase de charge peut être valorisé en étant par exemple réin-jecté dans une étape d'un procédé d'utilisation du gaz.

La présente invention trouve une application particulière dans le domaine de la géothermie profonde dans lequel le but est de valoriser l'énergie de la saumure (eau fortement minéralisée), prélevée en sous-sol, en alimentant les réseaux de chaleur et en produisant de l'électricité par exemple.

Le stockage de vapeur dans ce secteur permet de stocker l'énergie thermique pendant les périodes où la demande est faible afin de la restituer pendant les pics de consommation.

Généralement, la quantité de gaz incondensables dans la saumure est non négligeable, avec par exemple une fraction massique de gaz incondensable comprise entre 2% et 20% dépendante du site géothermique.

Le tableau suivant montre l'évolution du premier débit correspondant à l'injection de gaz et celle du deuxième débit correspondant à l'extraction de gaz pendant la charge en fonction de la teneur en CO2, gaz incondensable, pour stocker 3,71 MWh en 4h. Si la fraction massique de CO2 augmente, le premier débit et le deuxième débit augmentent afin de stocker la même énergie (Tableau 1).

| Fraction massique du CO2 en entrée [%] | Débit massique (vapeur+$CO_2$) en entrée - charge [kg/s] | Débit massique (vapeur+$CO_2$) en sortie (extrait) - charge [kg/s] | % sortie |
|---|---|---|---|
| 2,8 | 0,46 | 0,0253 | 5,5 |
| 5 | 0,53 | 0,0901 | 17 |
| 10 | 0,7 | 0,266 | 38 |

<u>Exemple 1</u> : Évolution de la pression et de l'énergie dans un accumulateur de vapeur sans gaz incondensables.

Par exemple, pour un accumulateur de vapeur de 345 m³, une énergie de 5MWh peut être stockée en 4 heures avec un débit de charge de 0,58 kg/s, entre 4,5 bars absolus et 7,5 bars absolus, c'est-à-dire entre 50,5 et 94 psi relatif (Figures 2 et 3), dans les conditions d'équilibre thermodynamique entre les deux phases liquide et vapeur.

L'énergie peut être évaluée de façon approchée dans ce cas-là par la relation :

$$E \approx m_L \, CpL \left[ T^{sat}(P_{max}) - T^{sat}(P_{min}) \right]$$

Avec (unité du Système International)

E: énergie

$m_L$ : masse de liquide dans l'accumulateur

CpL capacité calorifique moyenne du liquide

$T^{sat}(P_{min})$: température de saturation du liquide à Pression cible minimale

$T^{sat}(P_{max})$ : température de saturation du liquide à Pression cible maximale

Exemple 2-- : Évolution de la pression et de l'énergie dans un accumulateur de vapeur avec gaz incondensables.

La même expérience que l'exemple 1 est réalisée avec un gaz injecté comprenant de la vapeur et une fraction massique de 2,8% de gaz incondensables. Le débit de gaz injecté est maintenu identique à l'exemple 1.

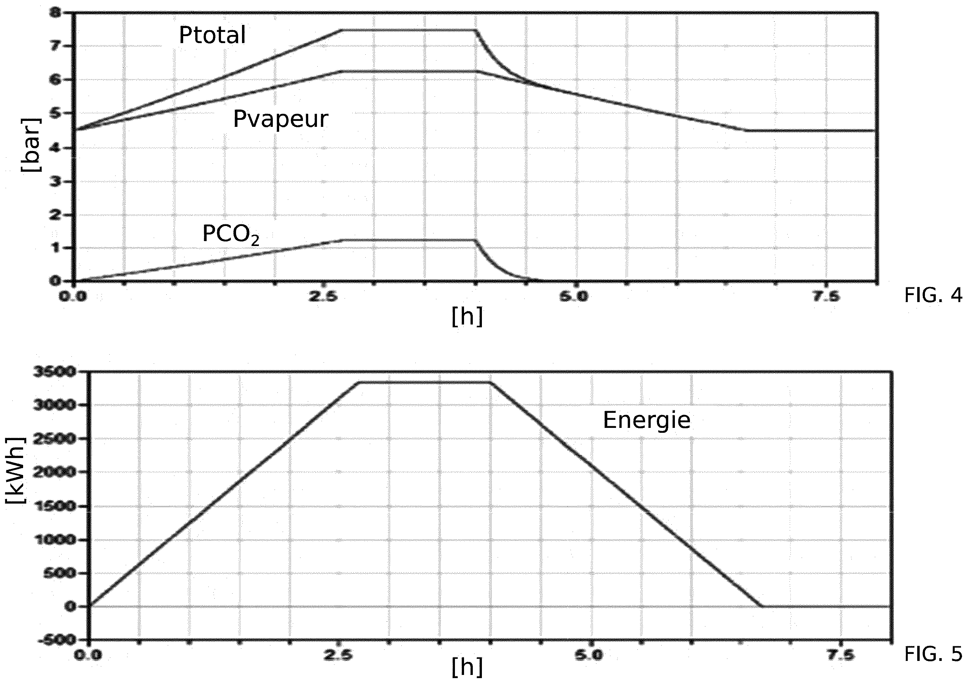

L'énergie stockée est fortement réduite (Figure 5) par rapport à l'exemple 1. Ici, elle est réduite à 3,34MWh, soit -33% de moins qu'à l'exemple 1.

La charge s'arrête quand la pression maximale (7,5 bars absolus) est atteinte, donc au bout de 2h40 au lieu de 4 h (Figure 4). Ceci est dû à la présence croissante de gaz incondensables dans le ciel de gaz 3 de la cuve 1, la pression partielle de vapeur n'est alors que de 6,3 bars absolus en fin de charge.

L'énergie peut être évaluée de façon approchée étant calculée dans ce cas-là par la relation :

$$E \approx m_L \, Cp \left[ T^{sat}(P_{steam,max}) - T^{sat}(P_{min}) \right]$$

$$P_{steam,max} = P_{max} - P_{CO2,max}$$

Avec (unité du Système International)

E: énergie

mL: masse de liquide dans l'accumulateur

Cp: capacité calorifique moyenne du liquide

Tsat(Psteam, max)) : température de saturation du liquide à Pression de vapeur cible maximale

Tsat (Pmin): température de saturation du liquide à Pression cible mini-malePmax: Pression cible maximale

$PCO_{2,max}$: Pression d'incondensable maximale

Exemple 3 : Évolution de la pression et de l'énergie dans un accumulateur de vapeur avec gaz incondensables.

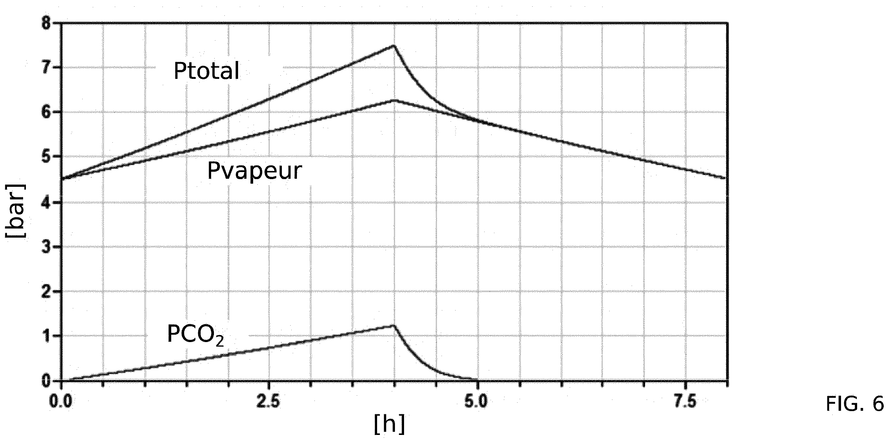

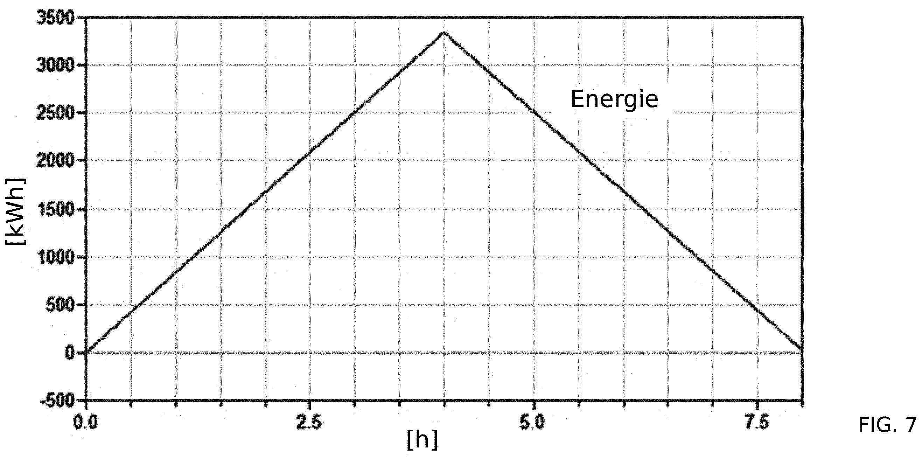

La même expérience que l'exemple 2 est réalisée avec un gaz injecté comprenant de la vapeur et une fraction massique de 2,8% de gaz incondensables. Le débit de gaz injecté est adapté pour conserver une durée de charge de 4h. Le débit de vapeur entrante est réduit de 0,58 kg/s à 0,39 kg/s (soit moins 33% qu'aux exemples 1 et 2) en conservant les mêmes conditions qu'à l'exemple 1, la charge s'arrête alors au bout de 4 heures, et la même quantité d'énergie est stockée qu'à l'exemple 2 (3.34MWh) (Figures 6 et 7).

Exemple 4 : Évolution de la pression et de l'énergie dans un accumulateur de vapeur avec gaz incondensables selon le procédé de l'invention.

La même expérience que l'exemple 3 est réalisée. Un accumulateur de vapeur d'un volume de 345 m$^3$ et un gaz comprenant de la vapeur avec une fraction massique de 2,8% de gaz incondensables dans la vapeur sont utilisés. La charge dure 4 heures et la décharge dure 4 heures. Le débit massique de gaz injecté est de 0,46 kg/s et le débit d'extraction est de 0,0253 kg/s soit 5,5% du débit d'entrée. Une énergie de 3.71MWh est stockée en 4 heures de charge en considérant un équilibre thermodynamique entre les pressions cibles minimale et maximale des exemples précédents soit 4,5 bars absolus et 7,5 bars absolus, c'est à dire entre 50,5 et 94 psi relatifs.

La capacité de stockage est donc augmentée de 3,34MWh à 3,71MWh soit 11% d'augmentation par rapport à l'exemple 2 ou 3.

L'invention n'est pas limitée aux modes de réalisations précédemment décrits et s'étend à tous les modes de réalisation couverts par les revendications.

LISTE DES REFERENCES

1. Cuve

2. Liquide

3. Ciel de gaz

4. Dispositif d'évacuation

5. Dispositif d'injection
6. Dispositif de remplissage et vidange de liquide
7. Vanne de décharge
8. Vanne de charge
9. Vanne de remplissage et vidange de liquide
10. Injecteur
11. Injecteur complémentaire
12. Vanne de charge complémentaire
13. Vanne de décharge
14. Evacuation

**Revendications**

1. Procédé de stockage d'énergie thermique dans un accumulateur de vapeur comprenant une cuve (1) contenant un liquide (2) et un ciel de gaz (3) agencé au-dessus du liquide (2), un dispositif d'injection (5) de gaz entrant dans la cuve (1) et un dispositif d'évacuation de gaz sortant de la cuve (1), le gaz comprenant de la vapeur et au moins un gaz incondensable, le procédé comprenant :

   - une phase de charge d'énergie comprenant une injection de gaz à un premier débit de gaz au moins partiellement dans le liquide contenu dans la cuve (1) de l'accumulateur par le dispositif d'injection (5) de gaz et la vapeur du gaz se condense au contact du liquide (2) plus froid et libère de l'énergie, ce qui augmente la température du liquide (2), et
   - une phase de décharge comprenant l'ouverture du dispositif d'évacuation et la baisse de la pression dans la cuve (1) provoquant une vaporisation du liquide (2), **caractérisé en ce que** le procédé comprend en outre pendant la phase de charge d'énergie une évacuation de gaz à un deuxième débit de gaz hors de la cuve (1) de l'accumulateur par le dispositif d'évacuation (4) de gaz, le premier débit de gaz et le deuxième débit de gaz étant contrôlés en fonction de la fraction massique de gaz incondensable dans le gaz injecté pour atteindre un stockage d'énergie optimal, le deuxième débit de gaz étant inférieur au premier débit de gaz.

2. Procédé selon la revendication précédente dans lequel l'évacuation de gaz à un deuxième débit de gaz est intermittente au cours de la phase de charge.

3. Procédé selon la revendication 1 dans lequel l'évacuation de gaz à un deuxième débit de gaz est continue au cours de la phase de charge.

4. Procédé selon l'une quelconque des revendications précédentes dans lequel l'évacuation de gaz à un deuxième débit de gaz est réalisée depuis le ciel de gaz (3).

5. Procédé selon l'une quelconque des revendications précédentes dans lequel l'injection de gaz à un premier débit de gaz est continue au cours de la phase de charge.

6. Procédé selon l'une quelconque des revendications précédentes dans lequel l'injection de gaz à un premier débit de gaz comprend un débit principal de gaz et un débit complémentaire de gaz.

7. Procédé selon la revendication précédente dans lequel l'injection de gaz à un débit complémentaire de gaz est intermittente au cours de la phase de charge.

8. Procédé selon la revendication 6 dans lequel l'injection de gaz à un débit complémentaire de gaz est continue au cours de la phase de charge.

9. Procédé selon l'une quelconque des revendications 6 à 8 dans lequel l'injection de gaz à un débit complémentaire de gaz est réalisée dans le liquide (2) contenu dans la cuve (1).

10. Procédé selon l'une quelconque des revendications 6 à 8 dans lequel l'injection de gaz à un débit complémentaire de gaz est réalisée dans un ciel de gaz (3) agencé au-dessus du liquide (2) contenu dans la cuve (1).

11. Procédé selon l'une quelconque des revendications 6 à 8 dans lequel le débit complémentaire de gaz est inférieur au débit principal de gaz.

12. Procédé selon l'une quelconque des revendications précédentes 6 à 8 dans lequel le deuxième débit de gaz est supérieur ou égal au débit complémentaire de gaz.

13. Procédé selon l'une quelconque des revendications précédentes dans lequel le liquide (2) contenu dans la cuve (1) est de l'eau et la vapeur du gaz est de la vapeur d'eau comprenant au moins un gaz incondensable.

14. Accumulateur de vapeur étant adapté pour mettre en oeuvre le procédé selon la revendication 1, comprenant une cuve (1) contenant un liquide (2) et un ciel de gaz (3), un dispositif d'injection (5) de gaz entrant dans la cuve (1), un dispositif d'évacuation ( 4) de gaz sortant de la cuve( 1), un module de gestion comprenant un ordinateur et une unité de contrôle comprenant des vannes de contrôles du dispositif d'injection (5) de gaz et du dispositif d'évacuation (4) de gaz sortant de la cuve (1), **caractérisé en ce que** le gaz comprenant de la vapeur et au moins un gaz incondensable, le module de gestion est configuré pour mettre en oeuvre les actions suivantes pendant la phase de charge d'énergie:

a) une injection de gaz à un premier débit de gaz au moins partiellement dans le liquide contenu dans la cuve (1) de l'accumulateur par le dispositif d'injection (5) de gaz, la vapeur du gaz se condense au contact du liquide (2) plus froid et libère de l'énergie, ce qui augmente la température du liquide (2)
b) une évacuation de gaz à un deuxième débit de gaz hors de la cuve (1) de l'accumulateur par le dispositif d'évacuation (4) de gaz, , le premier débit de gaz et le deuxième débit de gaz étant contrôlés en fonction de la fraction massique de gaz incondensable dans le gaz injecté pour atteindre un stockage d'énergie optimal, le deuxième débit de gaz étant inférieur au premier débit de gaz
et le module de gestion est configuré pour mettre en oeuvre l'action suivante pendant la phase de décharge d'énergie
c) l'ouverture du dispositif d'évacuation et la baisse de la pression dans la cuve (1) provoquant une vaporisation du liquide (2).

**Patentansprüche**

1. Verfahren zum Speichern von Wärmeenergie in einem Dampfspeicher, der einen Behälter (1), der eine Flüssigkeit (2) enthält, und einen Gashimmel (3), der über der Flüssigkeit (2) eingerichtet ist, und eine Einspritzvorrichtung (5) von Gas, das in den Behälter (1) eintritt, und eine Vorrichtung zum Ableiten von Gas, das aus dem Behälter (1) austritt, umfasst, wobei das Gas Dampf und mindestens ein nicht kondensierbares Gas umfasst, wobei das Verfahren umfasst:

- eine Energieladephase, die eine Gaseinspritzung mit einem ersten Gasdurchsatz mindestens teilweise in die Flüssigkeit, die in dem Behälter (1) des Speichers enthalten ist, durch die Gaseinspritzvorrichtung (5) umfasst, und wobei sich der Dampf des Gases bei Berührung der Flüssigkeit (2), die kälter ist, kondensiert und Energie freisetzt, was die Temperatur der Flüssigkeit (2) erhöht, und
- eine Entladephase, die das Öffnen der Ableitungsvorrichtung und das Senken des Drucks in dem Behälter (1) umfasst, was ein Verdampfen der Flüssigkeit (2) bewirkt,

**dadurch gekennzeichnet, dass** das Verfahren außerdem während der Energieladephase eine Ableitung von Gas mit einem zweiten Gasdurchsatz aus dem Behälter (1) des Speichers heraus durch die Gasableitungsvorrichtung (4) umfasst, wobei der erste Gasdurchsatz und der zweite Gasdurchsatz in Abhängigkeit von dem Massenanteil an nicht kondensierbarem Gas in dem eingespritzten Gas gesteuert werden, um eine optimale Energiespeicherung zu erreichen, wobei der zweite Gasdurchsatz geringer als der erste Gasdurchsatz ist.

2. Verfahren nach dem vorstehenden Anspruch, wobei die Gasableitung mit einem zweiten Gasdurchsatz im Laufe der Ladephase intermittierend ist.

3. Verfahren nach Anspruch 1, wobei die Gasableitung mit einem zweiten Gasdurchsatz im Laufe der Ladephase kontinuierlich ist.

4. Verfahren nach einem der vorstehenden Ansprüche, wobei die Gasableitung mit einem zweiten Gasdurchsatz im Laufe der Ladephase intermittierend ausgehend von dem Gashimmel (3) erfolgt.

5. Verfahren nach einem der vorstehenden Ansprüche, wobei die Gaseinspritzung mit einem ersten Gasdurchsatz im Laufe der Ladephase kontinuierlich ist.

6. Verfahren nach einem der vorstehenden Ansprüche, wobei die Gaseinspritzung mit einem ersten Gasdurchsatz einen Gashauptdurchsatz und einen komplementären Gasdurchsatz umfasst.

7. Verfahren nach dem vorstehenden Anspruch, wobei die Gaseinspritzung mit einem komplementären Gasdurchsatz im Laufe der Ladephase intermittierend ist.

8. Verfahren nach Anspruch 6, wobei die Gaseinspritzung mit einem komplementären Gasdurchsatz im Laufe der Ladephase kontinuierlich ist.

9. Verfahren nach einem der Ansprüche 6 bis 8, wobei die Gaseinspritzung mit einem komplementären Gasdurchsatz in die Flüssigkeit (2), die in dem Behälter (1) enthalten ist, erfolgt.

10. Verfahren nach einem der Ansprüche 6 bis 8, wobei die Gaseinspritzung mit einem komplementären Gasdurchsatz in einen Gashimmel (3), der über der Flüssigkeit (2), die in dem Behälter (1) enthalten ist, erfolgt.

11. Verfahren nach einem der Ansprüche 6 bis 8, wobei der komplementäre Gasdurchsatz geringer ist als der Hauptgasdurchsatz.

12. Verfahren nach einem der vorstehenden Ansprüche 6 bis 8, wobei der zweite Gasdurchsatz höher oder gleich dem komplementären Gasdurchsatz ist.

13. Verfahren nach einem der vorstehenden Ansprüche, wobei die Flüssigkeit (2), die in dem Behälter (1) enthalten ist, Wasser ist, und der Dampf des Gases der Wasserdampf ist, der mindestens ein nicht kondensierbares Gas umfasst.

14. Dampfspeicher, der dazu angepasst ist, das Verfahren nach Anspruch 1 umzusetzen, der einen Behälter (1) umfasst, der eine Flüssigkeit (2) und einen Gashimmel (3), eine Einspritzvorrichtung (5) von Gas, das in den Behälter (1) eintritt, eine Ableitungsvorrichtung (4) von Gas, das aus dem Behälter (1) austritt, ein Verwaltungsmodul, das einen Rechner und eine Steuereinheit umfasst, die Steuerschieber der Gaseinspritzvorrichtung (5) und der Ableitungsvorrichtung (4) von Gas, das aus dem Behälter (1) austritt, umfasst, **dadurch gekennzeichnet, dass** das Gas Dampf und mindestens ein nicht kondensierbares Gas umfasst, wobei das Verwaltungsmodul dazu konfiguriert ist, die folgenden Aktionen während der Energieladephase umzusetzen:

a) eine Gaseinspritzvorrichtung mit einem ersten Gasdurchsatz mindestens teilweise in die Flüssigkeit, die in den Behälter (1) des Speichers enthalten ist, durch die Gaseinspritzvorrichtung (5), wobei sich der Dampf des Gases bei Berührung mit der Flüssigkeit (2), die kälter ist, kondensiert und Energie freisetzt, was die Temperatur der Flüssigkeit (2) erhöht

b) eine Gasableitung mit einem zweiten Gasdurchsatz aus dem Behälter (1) des Speichers durch die Gasableitungsvorrichtung (4) heraus, wobei der erste Gasdurchsatz und der zweite Gasdurchsatz in Abhängigkeit von dem Massenanteil an nicht kondensierbarem Gas in dem eingespritzten Gas gesteuert werden, um eine optimale Speicherenergie zu erreichen, wobei der zweite Gasdurchsatz geringer ist als der erste Gasdurchsatz, und das Verwaltungsmodul dazu konfiguriert ist, die folgende Aktion während der Energieentladephase umzusetzen

c) das Öffnen der Ableitungsvorrichtung und das Senken des Drucks in dem Behälter (1), die eine Verdampfung der Flüssigkeit (2) bewirken.

## Claims

1. Method for storing thermal energy in a steam accumulator comprising a tank (1) containing a liquid (2) and an expansion space (3) arranged above the liquid (2), a device (5) for injecting gas entering into the tank (1) and a gas discharge device exiting the tank (1), the gas comprising steam and at least one incondensable gas, the method comprising:

- an energy charging phase comprising a gas injection at a first gas flow rate at least partially in the liquid contained in the tank (1) of the accumulator by the gas injection device (5) and the steam from the gas is condensed on contact with the colder liquid (2) and releases energy, which increases the temperature of the liquid (2), and
- a discharge phase comprising the opening of the discharge device and the drop of pressure in the tank (1) causing a vaporisation of the liquid (2), **characterised in that** the method further comprises, during the energy charging phase, a gas discharge at a second gas flow rate outside of the tank (1) of the accumulator by the gas discharge device (4), the first gas flow rate and the second gas flow rate being controlled according to the incondensable gas mass fraction in the injected gas to reach an optimal energy storage, the second gas flow rate being less than the first gas flow rate.

2. Method according to the preceding claim, wherein the gas discharge at a second gas flow rate is intermittent during the charging phase.

3. Method according to claim 1, wherein the gas discharge at a second gas flow rate is continuous during the charging phase.

4. Method according to any one of the preceding claims, wherein the gas discharge at a second gas flow rate is performed from the expansion space (3).

5. Method according to any one of the preceding claims, wherein the gas injection at a first gas flow rate is continuous during the charging phase.

6. Method according to any one of the preceding claims, wherein the gas injection at a first gas flow rate comprises a main gas flow rate and a complementary gas flow rate.

7. Method according to the preceding claim, wherein the gas injection at a complementary gas flow rate is intermittent during the charging phase.

8. Method according to claim 6, wherein the gas injection at a complementary gas flow rate is continuous during the charging phase.

9. Method according to any one of claims 6 to 8, wherein the gas injection at a complementary gas flow rate is performed in the liquid (2) contained in the tank (1).

10. Method according to any one of claims 6 to 8, wherein the gas injection at a complementary gas flow rate is performed in an expansion space (3) arranged above the liquid (2) contained in the tank (1).

11. Method according to any one of claims 6 to 8, wherein the complementary gas flow rate is less than the main gas flow rate.

12. Method according to any one of claims 6 to 8, wherein the second gas flow rate is greater than or equal to the complementary gas flow rate.

13. Method according to any one of the preceding claims, wherein the liquid (2) contained in the tank (1) is water and the steam from the gas is water vapour comprising at least one incondensable gas.

14. Steam accumulator being adapted to implement the method according to claim 1, comprising a tank (1) containing a liquid (2) and an expansion space (3), a device (5) for injecting gas entering into the tank (1), a device (4) for discharging gas exiting from the tank (1), a management module comprising a computer and a control unit comprising valves for controlling the gas injection device (5) and the device (4) for discharging gas exiting from the tank (1), **characterised in that** the gas comprising steam and at least one incondensable gas, the management module is configured to implement the following actions during the energy charging phase:

a) a gas injection at a first gas flow rate at least partially in the liquid contained in the tank (1) of the accumulator by the gas injection device (5), the steam from the gas is condensed on contact with the colder liquid (2) and releases energy, which increases the temperature of the liquid (2),

b) a gas discharge at a second gas flow rate outside of the tank (1) of the accumulator by the gas discharge device (4), the first gas flow rate and the second gas flow rate being controlled according to the incondensable gas mass fraction in the injected gas to reach an optimal energy storage, the second gas flow rate being less than the first gas flow rate,

and the management module is configured to implement the following action during the energy discharge phase:
c) the opening of the discharge device and the drop of pressure in the tank (1) causing a vaporisation of the liquid (2).

FIG. 1A

FIG. 1B

FIG. 1C

FIG. 2

FIG. 3

EP 4 019 745 B1

FIG. 4

FIG. 5

16

FIG. 6

FIG. 7

EP 4 019 745 B1

Capacité de stockage thermique de l'accumulateur
[MWh]

FIG. 8

Fraction massique de $CO_2$ dans l'injection de gaz

FIG. 9

EP 4 019 745 B1

EP 4 019 745 B1

FIG. 10

**EP 4 019 745 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2444594 A1